(19) Europäisches Patentamt
European Patent Office
Office européen des brevets

(11) **EP 2 931 447 B1**

(12) **EUROPÄISCHE PATENTSCHRIFT**

(45) Veröffentlichungstag und Bekanntmachung des Hinweises auf die Patenterteilung:
**04.01.2017 Patentblatt 2017/01**

(21) Anmeldenummer: **13802274.4**

(22) Anmeldetag: **25.11.2013**

(51) Int Cl.:
**B21B 38/02** (2006.01)    **B21C 51/00** (2006.01)
**G01B 21/20** (2006.01)

(86) Internationale Anmeldenummer:
**PCT/EP2013/074563**

(87) Internationale Veröffentlichungsnummer:
**WO 2014/090555 (19.06.2014 Gazette 2014/25)**

(54) **PLANHEITSMESSUNG UND MESSUNG DER EIGENSPANNUNGEN FÜR EIN METALLISCHES FLACHPRODUKT**

FLATNESS MEASURING AND MEASURING OF RESIDUAL STRESSES FOR A METALLIC FLAT PRODUCT

MESURE DE LA PLANÉITÉ ET MESURE DES TENSIONS PROPRES POUR UN PRODUIT MÉTALLIQUE PLAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2012 AT 505722012**

(43) Veröffentlichungstag der Anmeldung:
**21.10.2015 Patentblatt 2015/43**

(73) Patentinhaber: **Primetals Technologies Austria GmbH**
**4031 Linz (AT)**

(72) Erfinder:
• **LINSBOD, Robert**
**A-4020 Linz (AT)**
• **GRÜSS, Ansgar**
**91007 Erlangen (DE)**
• **BURGER, Rainer**
**90491 Nuernberg (DE)**
• **HLOBIL, Helmut**
**A-4491 Niederneukirchen (AT)**
• **HUNT, Peter**
**Corfe Mullen**
**Wimborne**
**Dorset BH21 3XQ (GB)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
**EP-A2- 1 369 186      DE-A1- 19 725 726**
**DE-A1-102007 059 185    JP-A- H01 292 208**

**Beschreibung**

Gebiet der Technik

Die vorliegende Erfindung betrifft ein Verfahren zur Planheitsmessung eines metallischen Flachprodukts, ein Verfahren zur Messung der Eigenspannungen in einem metallischen Flachprodukt, sowie eine Vorrichtung zur Planheitsmessung oder zur Messung der Eigenspannungein einem metallischen Flachprodukt.

Bei der Erzeugung eines metallischen Flachprodukts, vorzugsweise aus Stahl oder Aluminium (beispielsweise ein Stahlband), in einem Warm- oder Kaltwalzwerk aber auch bei der Qualitätskontrolle des Flachprodukts oder einer Platte, ist es vorteilhaft, wenn die Planheit des Flachprodukts mit hoher Genauigkeit bestimmt werden kann. Grundsätzlich sind dem Fachmann zur Planheitsmessung nicht berührende (auch kontaktlos bezeichnet) und berührende (d.h. nicht kontaktlose) Messverfahren bekannt. Nachteilig an den nicht kontaktlosen Messverfahren (z.B. durch drucksensitive Messrollen) ist, dass das Flachprodukt durch den Kontakt mit der Messrolle abkühlt und die Messrollen durch Zunder (insbesondere beim Warmwalzen) oder andere Verschmutzungen leicht verschmutzen können. Außerdem ist für die nicht kontaktlose Planheitsmessung ein bestimmter Mindestzug erforderlich, wodurch einerseits die Messgenauigkeit leidet und andererseits z.B. die Planheit eines zuglosen Bandkopfs bzw. Bandfußes nicht bestimmt werden kann. Nachteilig an den kontaktlosen Messverfahren ist deren unzureichende Genauigkeit.

Stand der Technik

Aus der Dissertation

Fabian Loges: Entwicklung neuer Strategien zur Messung und Regelung der Bandplanheit beim Flachwalzen, Kassel University Press, ISBN 978-3-89958-754-8, 2009. sind unterschiedliche Messverfahren und Messgeräte zur Planheitsmessung bekannt. Wie die Genauigkeit von Planheitsmessverfahren weiter erhöht werden kann, geht aus der Schrift nicht hervor.

Aus der EP 1369186 A2 ist ein Verfahren und eine Vorrichtung zur Planheitsmessung von Bändern bekannt. Dabei wird das Band 1 mittels einer Messrolle 2 umgelenkt und ein in die Messrolle 2 integrierter Messbalken 4 erfasst die auf das Band in Breitenrichtung einwirkenden Zugkräfte. Aus den Zugkräften werden sektionsweise die Zugspannungen in Breitenrichtung des Bandes 1 ermittelt.

Zusammenfassung der Erfindung

Eine Aufgabe der Erfindung ist es, die Genauigkeit und die Zuverlässigkeit existierender Planheitsmessgeräte bzw. von Verfahren zur Planheitsmessung weiter zu erhöhen.

Eine weitere Aufgabe der Erfindung besteht darin, ein Verfahren und eine Vorrichtung zur Messung der Eigenspannungen in einem metallischen Flachprodukt anzugeben.

Die erstgenannte Aufgabe wird durch ein Verfahren zur Planheitsmessung eines metallischen Flachprodukts, vorzugsweise eines Walzprodukts aus Stahl oder Aluminium, insbesondere eines Stahlbands, gelöst, das folgende Verfahrensschritte aufweist:

- Biegen des Flachprodukts in einer Biegeeinrichtung, sodass ein planes Flachprodukt nach dem Biegen einen Bogen mit einem Soll-Biegeradius $r_0$ ausbilden würde;
- Messen der Kontur, insbesondere der Ist-Biegeradien $r(y)$, im Bereich des Bogens des gebogenen Flachprodukts an mehreren Positionen $(y)$ in der Breitenrichtung des Flachprodukts; und
- Bestimmung der Planheit des Flachprodukts unter Berücksichtigung der gemessenen Kontur des gebogenen Flachprodukts.

Typischerweise wird ein metallisches Flachprodukt (beispielsweise ein von einer Vor- oder Fertigwalzstraße kommendes Stahlband) in einer horizontalen Ebene auf einem Rollgang geführt. Bei der Planheitsmessung wird das Flachprodukt in ei ner Biegeeinrichtung bogenförmig gebogen, sodass - ein ideal planes Flachprodukt vorausgesetzt - das Flachprodukt einen freien Bogen mit einem Soll-Biegeradius $r_0$ ausbilden würde.

Beim Biegen des Flachprodukts ist es vorteilhaft, wenn das Flachprodukt bogenförmig nach oben gebogen wird. Unter dem Begriff "bogenförmig nach oben gebogen" soll ein Aufbiegen des Flachprodukts verstanden werden, wobei der Mittelpunkt des Bogens des aufgebogenen Flachprodukts in vertikaler Richtung unterhalb des Scheitelpunkts des Bogens liegt. Durch das Biegen des Flachprodukts "nach oben" werden Schmutzpartikel (z.B. Zunder) aber auch Kühlwasser vom oberen Bereich des Bogens (insbesondere vom Scheitelpunkt) selbsttätig entfernt, sodass dadurch die Genauigkeit der Planheitsmessung erhöht wird. Alternativ kann das Flachprodukt natürlich auch "nach unten" bzw. in einer horizontalen Ebene in seitlicher Richtung gebogen werden.

Anschließend wird die Kontur des Flachprodukts, insbesondere durch eine Messung der Ist-Biegeradien $r(y)$, im Bereich des Bogens des gebogenen Flachprodukts an mehreren Positionen $(y)$ in der Breitenrichtung des Flachprodukts (d.h. quer zur Transportrichtung und quer zur Dickenrichtung des Flachprodukts) gemessen. Hierbei spielt es grundsätzlich keine Rolle, ob die Planheitsmessung kontaktlos oder nicht-kontaktlos erfolgt.

Die Messung der Planheit beim erfindungsgemäßen Verfahren wird an dem gebogenen Flachprodukt durchgeführt. Somit resultieren Form- oder Planheitsabweichungen in einer Änderung der Kontur des gebogenen Flachprodukts. Die Kontur wird gemessen und daraus die Planheit bestimmt.

Um die Genauigkeit der Planheitsmessung zu erhöhen, ist es günstig, wenn das Flachprodukt zumindest an der Messposition (idealerweise auch je einen Längsabschnitt vor und nach der Messposition) einen "freien Bogen" (d.h. uneingespannten Bogen) ausbilden kann. Im Allgemeinen ist es günstig, wenn die Messposition einen möglichst großen Abstand in Transportrichtung zu einer - eingangsseitigen oder ausgangsseitigen - Biegeeinrichtung aufweist.

Nach dem Messen der Kontur des gebogenen Flachprodukts wird die Planheit des Flachprodukts unter Berücksichtigung der gemessenen Kontur bzw. der gemessenen Ist-Biegeradien r(y) bestimmt. Das Bestimmen der Planheit und gängige Parameter dafür (z.B. engl. "I-unit" (I), "Height" (H), "% Steepness" (S), "% Elongation" (e), und "% Flatness" (f)) sind dem Fachmann z.B. aus dem Kapitel 1 "Definitions of Geometrical Parameters" aus

    V.B. Ginzburg. High-quality steel rolling: theory and practice, Marcel Dekker Inc., 1993.

bekannt.

Typischerweise wird das gebogene Flachprodukt nach dem Messen der Kontur wieder rückgebogen und das rückgebogene Flachprodukt auf einem Rollgang zum nächsten Verarbeitungsschritt geführt.

Normalerweise erfolgt die Planheitsmessung zwischen dem Vor- und dem Fertigwalzen bzw. zwischen dem Fertigwalzen und dem Abkühlen des Flachprodukts in einer Kühlstrecke. Ebenso gut wäre es aber möglich, die Planheitsmessung nach dem Abkühlen und z.B. unmittelbar vor dem Aufhaspeln des Bands zu einem Bund durchzuführen. Dadurch kann die Planheit des Bands im verkaufsfertigen Zustand ermittelt werden.

Um die Planheit des Flachprodukts nicht nur quer zur Transportrichtung, sondern auch in Längsrichtung beurteilen zu können, ist es vorteilhaft, dass die Kontur, insbesondere die Ist-Biegeradien r(x,y), des gebogenen Flachprodukts an mehreren Positionen (x) in Längsrichtung des Flachprodukts gemessen wird, und dass die Planheit des Flachprodukts für mehrere Positionen (x) in Längsrichtung des Flachprodukts unter Berücksichtigung der gemessenen Konturen des gebogenen Flachprodukts bestimmt wird.

Zur Erzielung einer möglichst planen Form bei einer Weiterverarbeitung des Flachprodukts, z.B. beim Laserschneiden, ist es vorteilhaft, wenn die Planheit des Flachprodukts abgespeichert und bei der Weiterverarbeitung berücksichtigt wird. Besonders vorteilhaft ist es, wenn die Planheit des Flachprodukts sowohl in Breiten- als auch in Längsrichtung abgespeichert wird. Die einfachste Berücksichtigung der Planheit bei der Weiterverarbeitung besteht darin, nicht ausreichend plane Bereiche des Flachprodukts auszuscheiden.

Die zweitgenannte Aufgabe wird durch ein Verfahren zur Messung der Eigenspannungen eines metallischen Flachprodukts, vorzugsweise eines Flachprodukts aus Stahl oder Aluminium, insbesondere eines Stahlbands, gelöst, das folgende Verfahrensschritte aufweist:

- Biegen des Flachprodukts in einer Biegeeinrichtung, sodass ein eigenspannungsfreies Flachprodukt nach dem Biegen einen Bogen mit einem Soll-Biegeradius $r_0$ ausbilden würde;
- Messen der Kontur, insbesondere der Ist-Biegeradien r(y), im Bereich des Bogens des gebogenen Flachprodukts an mehreren Positionen (y) in der Breitenrichtung des Flachprodukts;
- Berechnen der Eigenspannung $\sigma_x(y)$ des Flachprodukts unter Berücksichtigung der gemessenen Kontur des gebogenen Flachprodukts, beispielsweise

durch $\sigma_x(y) = E.\varepsilon_x(y) = E.\dfrac{r_0 - r(y)}{r_0}$ .

Typischerweise wird ein metallisches Flachprodukt auch vor der Messung der Eigenspannungen in einer horizontalen Ebene auf einem Rollgang geführt. Das Flachprodukt wird wie bei der Planheitsmessung in einer Biegeeinrichtung bogenförmig gebogen, sodass -ein ideal eigenspannungsfreies Flachprodukt vorausgesetzt - das gebogene Flachprodukt einen Soll-Biegeradius $r_0$ ausbilden würde.

Für die beiden Schritte Biegen des Flachprodukts und Messen der Kontur gelten die Aussagen zur Planheitsmessung unverändert weiter. Im Unterschied zur Planheitsmessung wird aus der gemessenen Kontur, insbesondere den Ist-Biegeradien r(y) über die Breite des Flachprodukts, die Eigenspannung $\sigma_x(y)$ des Flachprodukts berechnet. Die angegebene Formel ist für einen eindimensionalen Spannungszustand (wie er in gewalzten Bändern häufig vorkommt) ausreichend genau. Natürlich sind dem Fachmann aber auch für kompliziertere Spannungszustände, wie einen zweidimensionalen Spannungszustand, die entsprechenden Zusammenhänge aus der technischen Mechanik bekannt.

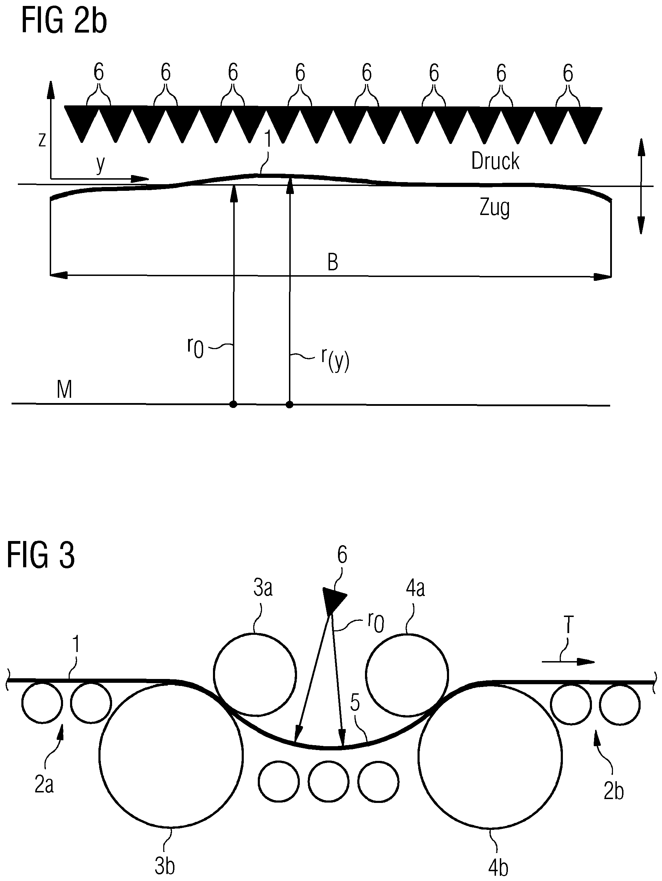

Die Messung der Eigenspannungen beim erfindungsgemäßen Verfahren wird an dem gebogenen Flachprodukt durchgeführt, wodurch den lokal im Flachprodukt vorhandenen Eigenspannungen ein Ausweichen ermöglicht wird (siehe Fig 2b, wobei Bereiche mit Zugspannungen nach innen und Bereiche mit Druckspannungen nach außen ausweichen). Das Ausweichen bedingt eine Änderung der Kontur des gebogenen Flachprodukts. Die Kontur wird gemessen und daraus die Eigenspannungen berechnet.

Um die Eigenspannungen des Flachprodukts nicht nur an einer Längsposition des Flachprodukts, sondern auch an mehreren Positionen in Längsrichtung beurteilen zu können, ist es vorteilhaft, dass die Kontur, insbesondere die Ist-Biegeradien r(x,y), des gebogenen Flachprodukts an mehreren Positionen (x) in der Längsrichtung des Flachprodukts gemessen wird, und dass die Eigenspannung des Flachprodukts für mehrere Positionen (x) des Flachprodukts unter Berücksichtigung der gemessenen Konturen des gebogenen Flachprodukts berechnet wird, beispielsweise durch

$$\sigma_x(x,y) = E.\varepsilon_x(x,y) = E.\frac{r_0 - r(x,y)}{r_0}.$$

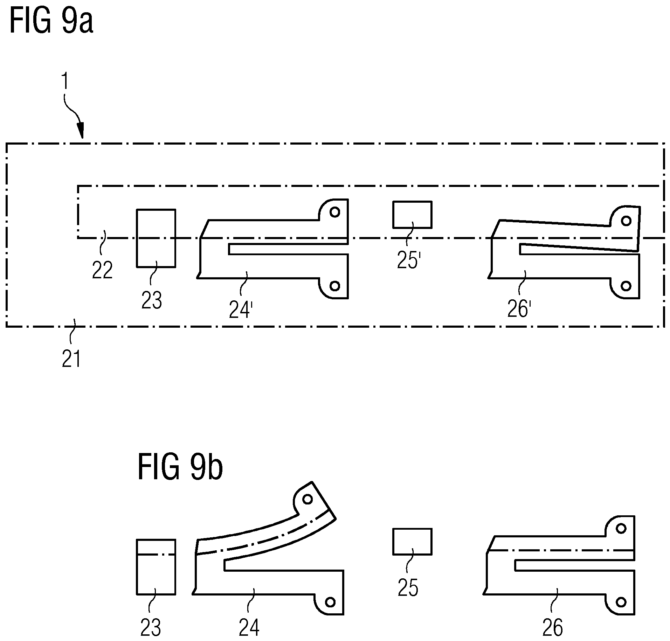

Besonders vorteilhaft ist es, wenn die Eigenspannungen $\sigma_x$ des Flachprodukts abgespeichert und bei einer Weiterverarbeitung des berücksichtigt werden. Besonders vorteilhaft ist es, wenn die Eigenspannungen des Flachprodukts sowohl in Breiten- als auch in Längsrichtung abgespeichert werden. Die einfachste Berücksichtigung der Eigenspannungen bei der Weiterverarbeitung besteht darin, Bereiche mit hohen bzw. inhomogenen Eigenspannungen auszuscheiden. Dadurch können Bauteile besonders formgenau hergestellt werden. Besonders vorteilhaft ist es, eine Vorausberechnung der Form (Kontur) eines Bauteils unter Berücksichtigung der (ggf. lokal inhomogenen) Eigenspannungen vorzunehmen, sodass der aus einer eigenspannungsbehafteten Platte ausgeschnittene Bauteil nach dem Ausschneiden die gewünschte Form aufweist (siehe auch Fig 9a,9b).

Die Genauigkeit der Planheitsmessung bzw. der Messung der Eigenspannung kann weiter erhöht werden, wenn das Flachprodukt bei der Messung im Wesentlichen zuglos und drucklos, d.h. keinen oder nur geringen Zug- bzw. Druckspannungen ausgesetzt, ist. Um dies zu erreichen sind dem Fachmann ausreichend viele Möglichkeiten bekannt. Beispielsweise kann das einlaufseitige und/oder das auslaufseitige Drehmoment der Einlauf-Rollen der eingangsseitigen Biegeeinrichtung und/oder der Auslauf-Rollen der auslaufseitigen Biegeeinrichtung so eingestellt werden, dass das Flachprodukt bei der Messung annähernd zug- und drucklos ist. Sollten diese Rollenpaare nicht angetrieben ausgeführt sein, könnten auch die Drehmomente von externen (d.h. in Transportrichtung vor den Einlauf-Rollen oder nach den Auslauf-Rollen) Treibern so eingestellt werden, dass das Flachprodukt bei der Messung annähernd zug- bzw. drucklos gehalten wird. Ein zugloses Flachprodukt (insbesondere ein Band) weist keine zug- bzw. druckbedingten Verformungen (z.B. Einschnürungen) auf, wodurch die Genauigkeit der Messung erhöht wird.

Eine Abkühlung des Flachprodukts durch Wärmeübertragung bei der Planheitsmessung bzw. der Messung der Eigenspannung kann verhindert werden, wenn die Messung optisch durch mehrere Lichtstrahlen, insbesondere Laserstrahlen, erfolgt, wobei ein Lichtstrahl von einer Lichtquelle auf das Flachprodukt ausgestrahlt, der Lichtstrahl von der Oberfläche des Flachprodukts reflektiert, und der reflektierte Lichtstrahl von einem Empfänger empfangen wird. Der Biegeradius des Flachprodukts als Indikator für die Planheit bzw. die Eigenspannung kann über den Gesamtabstand zwischen dem Sender, dem Flachprodukt und dem Empfänger durch die Laufzeit des Lichtstrahls, durch die Phasendifferenz zwischen dem ausgestrahlten und dem empfangenen Lichtstrahl oder durch Triangulation ermittelt werden. Unter reflektiert soll in dieser Anmeldung auch die diffuse Reflektion (Streuung) an einer Oberfläche verstanden werden.

Ein kompaktes Abstandsmessgerät kann erreicht werden, wenn ein Lichtstrahl von einem Sender-Empfänger, d.h. von einem Gerät das sowohl einen Sender als auch einen Empfänger beinhaltet, ausgestrahlt und wieder empfangen wird.

Um mehrere Werte für die Kontur des Flachprodukts in dessen Längs- und Breitenrichtung zu bekommen, können mehrere Lichtstrahlen in Form eines Lichtgitters auf das Flachprodukt projiziert. Die Lichtstrahlen werden von der Oberfläche des Flachprodukts reflektiert und die reflektierten Lichtstrahlen z.B. von einer oder mehrerer Kamera empfangen. Die Auswertung der Bilder der Kamera erfolgt vorzugsweise in Echtzeit.

Ein besonders einfacher Sender-Empfänger wird in der Breitenrichtung des Flachprodukts verfahren (auch traversieren genannt).

Alternativ dazu können mehrere Lichtquellen und mehrere Empfänger in der Breitenrichtung des Flachprodukts angeordnet werden, wobei die Messung der Ist-Biegeradien r(y) in Breitenrichtung des gebogenen Flachprodukts im Wesentlichen zeitgleich erfolgt. Dadurch wird es möglich, die Planheit bzw. die Eigenspannung eines bewegten Flachprodukts gleichzeitig an mehreren Positionen - quer zur Transportrichtung - zu bestimmen. Dabei ist es vorteilhaft, wenn die Abstandsmessungen an den mehreren Positionen zeitgleich ausgelöst werden und innerhalb eines Abtastschritts eines Mess- bzw. Regelsystems ausgewertet werden.

Das erfindungsgemäße Verfahren ist besonders gut für eine Planheitsregelung eines metallischen Flachprodukts, vorzugsweise eines Flachprodukts aus Stahl oder Aluminium, insbesondere eines Stahlbands, in einem Walzwerk geeignet, aufweisend die Verfahrensschritte:

- Walzen eines Flachprodukts im Walzwerk;
- Planheitsmessung der Ist-Planheit $P_{Ist}$ des gewalzten Flachprodukts nach einem der Ansprüche 1 bis 3, und 7 bis 9;
- Bestimmung eines Regelfehlers e zwischen einer Soll-Planheit $P_{soll}$ und der Ist-Planheit $P_{Ist}$, $e = P_{Soll} - P_{Ist}$;
- Bestimmung einer Stellgröße u in Abhängigkeit des Regelfehlers e mittels eines Reglers;
- Beaufschlagung eines Aktuators in einem Walzgerüst des Walzwerks mit der Stellgröße u, sodass der Regelfehler e minimiert wird.

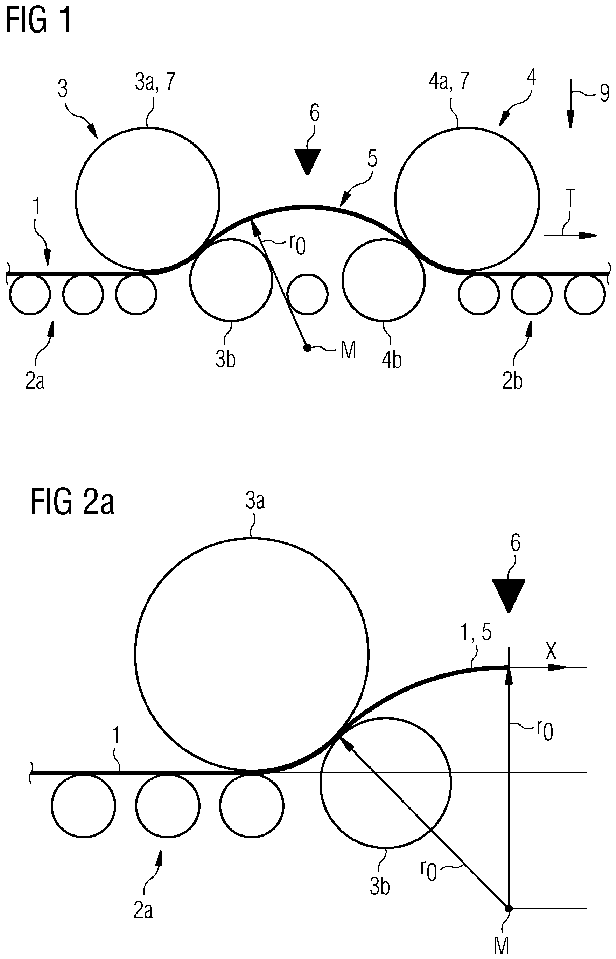

Dadurch wird die Planheit des Flachprodukts auch bei unterschiedlichen Betriebsbedingungen auf einem hohen Niveau gehalten. Dabei wird die Ist-Planheit eines in einem Walzgerüst eines Walzwerks (warm oder kalt) gewalzten Flachprodukts gemessen und die Abweichung (der sog. Regelfehler) e zwischen der Soll-Planheit $P_{Soll}$ und der Ist-Planheit $P_{Ist}$ bestimmt. Anschließend bestimmt ein Regler in Abhängigkeit des Regelfehlers eine Stellgröße u, die mindestens einem Aktuator (z.B. ein Aktuator für eine Walzenbiegung in einem UC oder CVC Walzgerüst) des Walzgerüsts zugeführt wird, wodurch der Regelfehler e minimiert wird. Durch diese Maßnahme können Planheitsfehler bereits beim Walzen des Flachprodukts verhindert werden. Dadurch können Wellen im Flachprodukt (z.B. sog. "Long Center", "Long Edges", "Quarter Buckles", "Edge Buckles", "Center Buckles", "Side Buckles") etc. vermieden werden; vgl. Fig. 1.13 "Forms of strip manifest shape" des o.a. Buchs von Ginzburg).

Besonders vorteilhaft ist es, wenn das vorgenannte Verfahren zur Planheitsregelung an mehreren Positionen in Breitenrichtung des Flachprodukts ausgeführt wird und die Geometrie des Flachprodukts durch mehrere Aktuatoren gezielt beeinflusst wird.

Die Genauigkeit der Messung der Planheit bzw. der Eigenspannung kann weiter erhöht werden, wenn bei, kurz vor, vorzugsweise unmittelbar vor, oder kurz nach, vorzugsweise unmittelbar nach, der Messung der Kontur oder der Biegeradien r(y) des gebogenen Flachprodukts die Temperatur T(y) einer (Längs-)Faser des Flachprodukts in der Breitenrichtung (y) gemessen wird und die Temperatur T(y) der Faser bei der Bestimmung der Planheit oder der Berechung der Eigenspannung berücksichtigt wird.

Dadurch wird der Einfluss der lokalen Wärmeausdehnungen des Flachprodukts auf r berücksichtigt, sodass dadurch beispielsweise auch die Planheit bzw. die Eigenspannungen des z.B. beim Warmwalzen oftmals kälteren Rands des Bands mit hoher Genauigkeit bestimmt werden kann. Die Messung kann z.B. durch Pyrometer oder eine Infrarotkamera erfolgen. Alternativ zu einer Messung könnte die Temperaturverteilung im Flachprodukt, z.B. beim Warmwalzen, durch ein Berechnungsmodell bestimmt werden. Dies erfolgt vorzugsweise online. Die lokalen Temperaturen im Band können auch durch eine Kombination von einer vor- und/oder nachgelagerten Messung mit einem Berechnungsmodell bestimmt werden. Das Berechnungsmodell berücksichtigt z.B. die Wärmekapazität und die Wärmeleitfähigkeit des Bandes, den Emissionsgrad, Konvektion, Umgebungstemperaturen und die Wärmestrahlung der Umgebung.

Die eingangs genannte Aufgabe wird ebenfalls durch eine Vorrichtung zur Planheitsmessung oder zur Messung der Eigenspannungen eines metallischen Flachprodukts gelöst, aufweisend:

- ein eingangsseitiger Rollgang zum Führen des Flachprodukts;
- eine eingangsseitige Biegeeinrichtung mit mindestens zwei Einlauf-Rollen zum Biegen des Flachprodukts, sodass das gebogene Flachprodukt einen Biegeradius $r_0$ ausbilden kann;
- ein Abstandsmessgerät zur Messung der Kontur, insbesondere der Ist-Biegeradien r(y), des gebogenen Flachprodukts an mehreren Positionen in der Breitenrichtung des Flachprodukts;
- eine Recheneinheit zur Bestimmung der Planheit oder der Eigenspannungen des Flachprodukts, das mit dem Abstandsmessgerät signaltechnisch verbunden ist.

Durch den eingangsseitigen Rollgang wird das Flachprodukt an die Vorrichtung zur Planheitsmessung bzw. zur Messung der Eigenspannungen des metallischen Flachprodukts herangeführt. Durch die beiden Einlauf-Rollen der eingangsseitigen Biegeeinrichtung, die sich typischerweise in Dickenrichtung des Flachprodukts gegenüberliegen, wird das Flachprodukt gebogen, sodass das gebogene Flachprodukt - ein im Wesentlichen planes im Falle der Planheitsmessung bzw. ein im Wesentlichen eigenspannungsfreies Flachprodukt vorausgesetzt - einen Biegeradius $r_0$ ausbilden würde. Durch das Abstandsmessgerät kann die Kontur des Flachprodukts an mehreren Positionen in der Breitenrichtung des Flachprodukts gemessen werden. Die Recheneinheit - die signaltechnisch mit dem Abstandsmessgerät verbunden ist - kann aus der Kontur des gebogenen Flachprodukts die Planheit bzw. die Eigenspannungen des Flachprodukts bestimmen.

Es ist zweckmäßig, wenn das Abstandsmessgerät ein optisches Planheitsmessgerät ist. Alternativ kann das Abstandsmessgerät mehrere, in der Breitenrichtung des Flachprodukts versetzte, Kontaktrollen aufweisen.

Um das Eindringen von Verschmutzungen in das Abstandsmessgerät zu verhindern, ist es vorteilhaft, wenn das Abstandsmessgerät in vertikaler Richtung oberhalb des Flachprodukts angeordnet ist. Weiters ist es vorteilhaft, wenn das Abstandsmessgerät in horizontaler Richtung im Bereich des Scheitelpunkts des Bogens des gebogenen Flachprodukts angeordnet ist.

Es ist zweckmäßig, wenn die Vorrichtung außerdem eine ausgangsseitige Biegeeinrichtung mit zumindest zwei Auslauf-Rollen zum Rückbiegen des Flachprodukts; und einen ausgangsseitigen Rollgang zum Führen des Flachprodukts umfasst.

Der Zug des Flachprodukts kann durch die erfindungsgemäße Vorrichtung eingestellt werden, in dem zumindest eine Rolle aus den Einlauf-Rollen zum Biegen des Flachprodukts und/oder zumindest eine Rolle den Auslauf-Rollen zum Rückbiegen des Flachprodukts antreibbar ausgebildet ist.

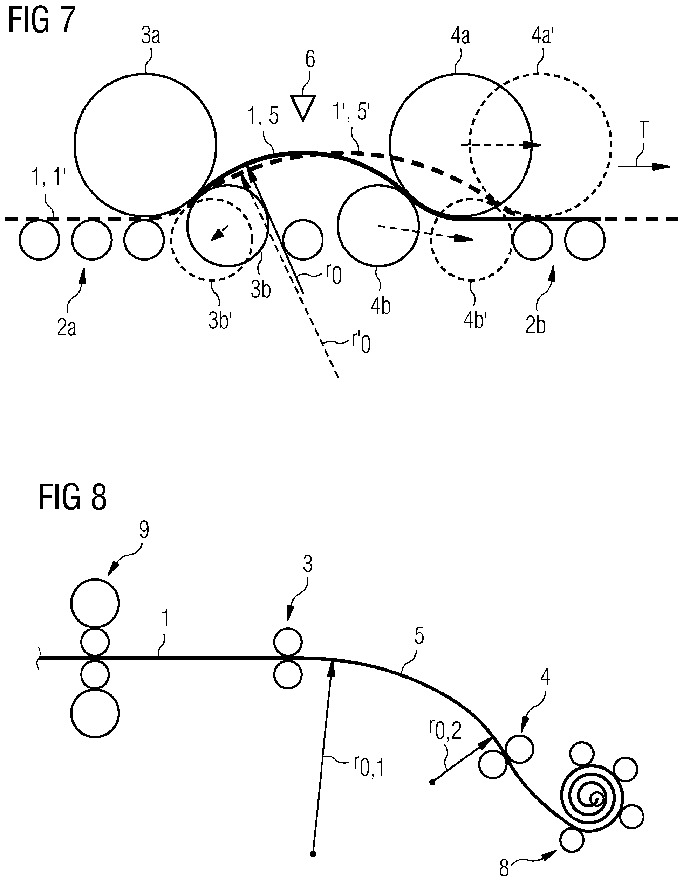

Vorteilhafterweise werden bei der Detektion relativ hochfrequenter Wellen im Flachprodukt relativ kleine Biegeradien $r_0$ verwendet. Für die Detektion relativ niederfrequenter Wellen sind relativ große Biegeradien $r_0$ ausreichend. Sollen sowohl hoch- und niederfrequente Wellen mit hoher Genauigkeit aufgelöst werden, kann eine Vorrichtung variable Biegeradien $r_0$ (vgl. Fig 7) aufweisen.

**Kurze Beschreibung der Zeichnungen**

Weitere Vorteile und Merkmale der vorliegenden Erfindung ergeben sich aus der nachfolgenden Beschreibung nicht einschränkender Ausführungsbeispiele. Dabei wird auf folgende Figuren Bezug genommen, die zeigen:

Fig 1: eine schematische Darstellung einer erfindungsgemäßen Vorrichtung zur Planheitsmessung bzw. zur Messung der Eigenspannungen eines Flachprodukts.

Fig 2a: eine Detaildarstellung zu Fig 1.

Fig 2b: eine Seitenansicht des Bands aus Fig 1.

Fig 3: eine Darstellung einer alternativen Vorrichtung zu Fig 1.

Fig 4 und 5: eine schematische Darstellung einer ersten und einer zweiten Variante der Vorrichtung nach Fig 1.

Fig 6a und 6b: eine Darstellung des Bogens aus Fig 1 bei unterschiedlichen Bandzügen.

Fig 7: eine Darstellung der Vorrichtung nach Fig 1 mit veränderbarem $r_0$ und veränderbarer Bogenlänge für dünne und dicke Bänder.

Fig 8: eine Darstellung einer erfindungsgemäßen Vorrichtung mit einem über die Längserstreckung variablen Biegeradius $r_0$.

Fig 9a und 9b: eine Darstellung des Einflusses von Zugspannungen im Flachprodukt auf einen nachfolgenden Produktionsprozess.

**Beschreibung der Ausführungsformen**

In der Fig 1 ist schematisch eine Vorrichtung zur Planheitsmessung bzw. zur Messung der Eigenspannungen in einem als Stahlband ausgebildeten Flachprodukt 1 gezeigt. Nachdem das Band in einem Walzgerüst einer nicht dargestellten Fertigwalzstraße gewalzt worden ist, wird das Band 1 über einen eingangsseitigen Rollgang 2a in horizontaler Richtung an die eingangsseitige Biegeeinrichtung 3 mit einem Paar 3a,3b von Einlauf-Rollen, die als Treiber-Rollen 7 ausgeführt sind, herangeführt. Durch die Einlauf-Rollen 3a,3b wird das Band 1 nach oben gebogen, wodurch sich - ein planes bzw. eigenspannungsfreies Band vorausgesetzt - ein Bogen 5 mit einem Krümmungsradius $r_0$ um den Mittelpunkt M ausbildet. Der Bogen 5 ist zwischen den Kontaktlinien der Einlauf-Rollen 3a,3b und den Kontaktlinien der Auslauf-Rollen frei, d.h. er wird in diesem Bereich nicht geführt. Oberhalb und in etwa im Bereich des Scheitelpunkts des Bogens 5 sind mehrere Abstandsmessgeräte 6 angeordnet. Im dargestellten Fall sendet jede Lichtquelle eines Abstandsmessgeräts 6 einen Laserstrahl aus, der von der Oberfläche des Bogens 5 reflektiert und vom Empfänger im Abstandsmessgerät 6 wieder empfangen wird. Somit ermitteln die Abstandsmessgeräte 6 die Kontur des Bands an mehreren Positionen y in der Breitenrichtung des Bands 1. Konkret wird die Kontur des Bands 1 z.B. aufgrund der Laufzeit des Laserstrahls ermittelt, oder es wird die Phasenverschiebung des reflektierten Lichtstrahls zum ausgestrahlten Lichtstrahl ermittelt, wodurch geringste Abweichungen in der Kontur des Bands ermittelt werden können.

So wie in Fig 2a dargestellt, können mehrere - hier 16 Stück - Abstandsmessgeräte 6 in der Breitenrichtung y des Bands 1 angeordnet sein; alternativ dazu könnte ein Abstandsmessgerät 6 aber auch in der Breitenrichtung y des Flachprodukts traversieren.

Nach der Messung der Kontur wird das Band 1 durch die beiden Auslauf-Rollen 4a,4b wieder in Transportrichtung T gebogen und anschließend auf den ausgangsseitigen Rollgang 2b in horizontaler Transportrichtung T zu einer nicht dargstellten Kühlstrecke geführt. Um die Planheits- bzw. die Eigenspannungsmessung nicht durch Zug bzw. Druck im Band zu verfälschen, ist das Band im Bereich des Bogens 5 in etwa zug- und drucklos. Dies erfolgt bspw. dadurch, dass die Einlauf-Rollen 3a,3b und die Auslauf-Rollen 4a,4b als Treiberrollen 7 ausgeführt sind und die Antriebsmomente der Treiberrollen 7 so eingestellt werden, dass das Band 5 bei der Messung im Wesentlichen zug-/drucklos ist.

Die Kontur, insbesondere die Ist-Biegeradien r(y), des Bands wird an eine nicht dargestellte Recheneinheit übertragen, das die Planheit und/oder die Eigenspannungen des Bands bestimmt und über eine Ausgabeeinheit ausgibt. Hierbei sind die Abstandsmessgeräte 6 über eine Bus-Schnittstelle mit der Recheneinheit verbunden.

Um die Planheit bzw. die Eigenspannungen des Bands 1 nicht nur in Breitenrichtung y bestimmen zu können, wird das Band 1 in Transportrichtung T weiterbewegt, währenddessen die Abstandsmessgeräte 6 die Kontur des Flachprodukts bestimmen. Aus den Konturinformationen, die beispielsweise in Form einer Matrix vorliegen (z.B. können die 16 zeitgleich ausgewerteten Ist-Biegeradien r(y) des Flachprodukts in Breitenrichtung eine Zeile der Matrix darstellen; aufeinander nachfolgende Abtastschritte der Kontur stehen in benachbarten Zeilen der Matrix), kann die Planheit des Bands bestimmt werden. Bezüglich der Formeln für gängige Planheitsparameter wird verwiesen auf das Kapitel *"1.18 Formulas for Strip Flatness"* in V.B. Ginzburg. High-quality steel rolling: theory and practice, Marcel Dekker Inc., 1993.

Zur Unterscheidung von "oben" und "unten" wurde in Fig 1 die Erdbeschleunigung g eingezeichnet.

Die Fig 2a zeigt ein Detail der Fig 1. Die Fig 2b zeigt eine Seitenansicht des aufgebogenen Bands 1 mit 16 über die Breite B des Bands 1 verteilten Abstandsmessgeräten 6. Jedes Abstandsmessgerät 6 sendet einen Laserstrahl auf das Band 1 aus, der vom Band 1 reflektiert und vom Abstandsmessgerät 6 wieder empfangen wird. Durch die Auswertung des Laserstrahls können die Ist-Biegeradien r(y) über der Breitenrichtung y des Bands 1 bestimmt werden. Durch die Auswertung der Kontur in Breitenrichtung y können auch andere Formabweichungen bestimmt werden, beispielsweise ein sog. "Säbel" (engl. *camber*) eines ein- und auslaufseitig eingespannten Bands. Dieser äußert sich in einer Neigung der Kontur in der y-z Ebene.

Die Eigenspannungen im Flachprodukt 1 werden ebenso wie die Planheit aufgrund der Kontur des Flachprodukts 1 bestimmt. Die Eigenspannung $\sigma_x(y)$ des Flachprodukts 1 in x-Richtung an einer Position y in Breitenrichtung beträgt

$$\sigma_x(y) = E.\varepsilon_x(y) = E.\frac{r_0 - r(y)}{r_0} \ ,$$

wobei E der Elastizitätsmodul des Flachprodukts, $\varepsilon_x(y)$ die Dehnung in x-Richtung an der Position y, r(y) der gemessene Ist-Biegeradius an der Position y, und $r_0$ der nominelle Biegeradius des Flachprodukts in der Vorrichtung ist. Bei einer vereinfachten Berechnung, kann $r_0$ als mittlerer Radius r(y) über die Breite B angenommen werden.

Die Fig 3 zeigt eine Alternative zur Vorrichtung nach Fig 1, bei der das Band 1 nach unten gebogen wird. Um die Beeinflussung der Messung durch Zunder bzw. Kühlwasser zu vermeiden, wird der Bogen 5 durch Druckluft freigeblasen.

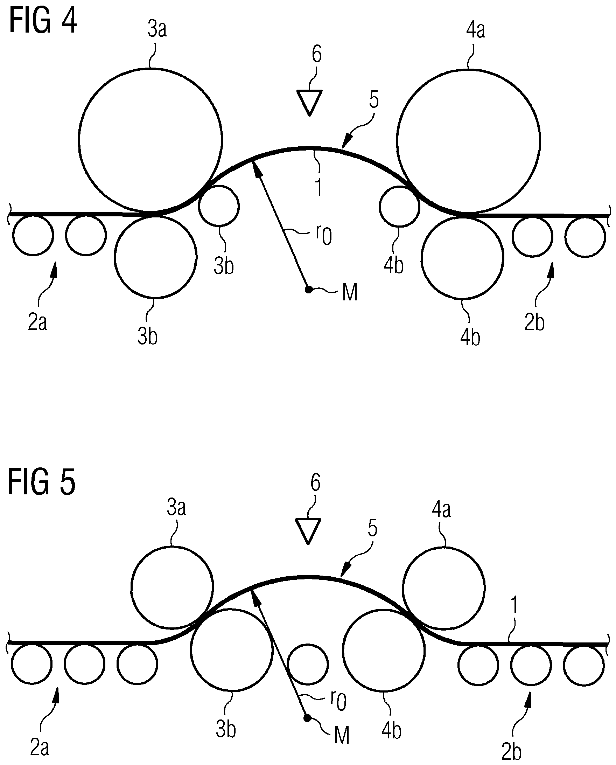

Die Fig 4 und 5 zeigen zwei weitere erfindungsgemäße Alternativen zu Fig 1. In der Fig 4 weisen die Einlauf-Rollen eine obere Rolle 3a und zwei untere Rollen 3b auf. Ebenso verhält es sich mit den Auslauf-Rollen 4a, 4b. Bei der Fig 5 weisen jeweils die oberen und die unteren Einlauf-Rollen 3a,3b und die Auslauf-Rollen 4a,4b den gleichen Durchmesser auf.

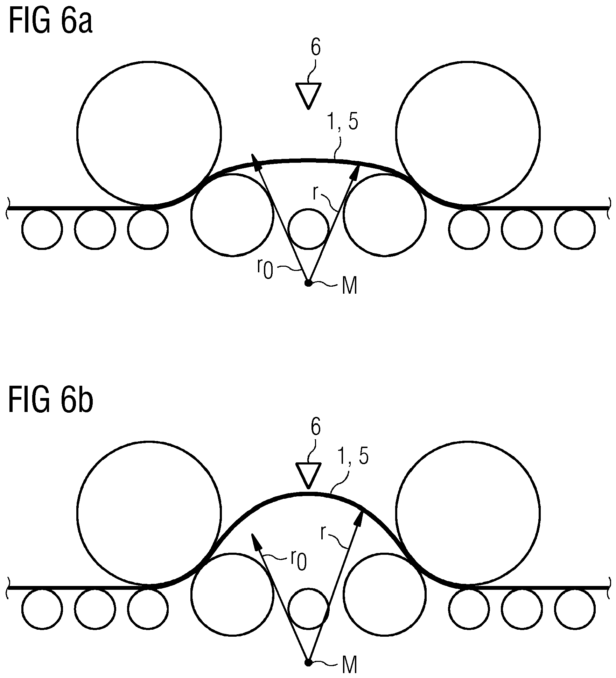

Die Fig 6a und 6b zeigen die Vorrichtung nach Fig 1, wobei in Fig 6a ein gegenüber Fig 1 erhöhter Bandzug im Band 1 und in Fig 6b ein gegenüber Fig 1 verringerter Bandzug vorherrscht. Der Ist-Biegeradius der Fig 6a,6b ist mit r angegeben; der nominelle Biegeradius aus Fig 1 beträgt $r_0$. Durch Auswertung des Ist-Biegeradius r kann außerdem der Zug des Bands 1 gezielt eingestellt werden. Der Bogen 5 zwischen den Einlauf-Rollen 3a,3b und den Auslauf-Rollen 4a,4b dient zudem als Puffer, sodass kurzfristig auftretende Schwankungen zwischen dem Einlauf und dem Auslauf nur zu geringen Zugschwankungen führen.

Grundsätzlich ist das erfindungsgemäße Verfahren und die erfindungsgemäße Vorrichtung für dünnes als auch für relativ dickes Flachprodukt geeignet. Die Fig 7 zeigt die notwendigen Veränderungen bei der Vorrichtung ausgehend von einem dünnen Band 1 zu einem relativ dicken Band 1'. Konkret wird die untere Einlauf-Rolle 3b etwas gegen die Transportrichtung T und etwas nach unten verschoben, die obere und die untere Auslauf-Rollen 4a,4b werden - so wie durch strichlierte Pfeile dargestellt - jeweils in Transportrichtung T verschoben und die Rolle 4b symmetrisch zu 3b etwas nach unten versetzt. Somit wird der Krümmungsradius $r_0'$ des Bogens 5' beim dicken Band 1' gegenüber dem Krümmungsradius $r_0$ des Bogens 5 beim dünnen Band 1 erhöht.

Die Fig 8 zeigt eine modifizierte Vorrichtung zur Planheitsmessung bzw. zur Messung der Eigenspannungen im Flachprodukt 1, wobei die Biegeradien r über der Längserstreckung des Flachprodukts 1 nicht konstant sind. Konkret beträgt der Biegeradius nach der eingangsseitigen Biegeeinrichtung 3 $r_{0,1}$ und kurz vor der ausgangsseitigen Biegeeinrichtung 4 $r_{0,2}$, wobei gilt $r_{0,1} > r_{0,2}$. Das Flachprodukt 1 wird nach der Messung durch nicht dargestellte Konturmessgeräte 6 auf einen Haspel 8 aufgewickelt. Um die Genauigkeit der Planheitsmessung bzw. der Eigenspannungsmessung weiter zu erhöhen, kann die Kontur des Flachprodukts 1 im Bereich des Bogens 5 an mehreren Positionen in der Längsrichtung des Flachprodukts 1 erfasst werden. Aus den Konturen wird jeweils die Planheit bzw. die Eigenspannung berechnet. Die zumindest teilweise redundanten Konturinformationen können zu einer Verbesserung der Genauigkeit der Messungen verwendet werden, bspw. können die Ergebnisse der Planheits- bzw. Eigenspannungsmessungen gemittelt werden.

Die Fig 9a und 9b zeigen, dass die Kenntnis der Eigenspannungen in einem Flachprodukt auch für weitere Produktionsschritte wichtig ist. In Fig 9a ist ein Stahlband 1 dargestellt, das einen Bereich 22 mit Zugspannungen und außerhalb von 22 einen Bereich 21 ohne Zugspannungen aufweist. Weiters sind die Schnittformen 23'-26' von unterschiedlichen Bauteilen 23-26 dargestellt, wobei z.B. diese Bauteile aus dem Flachprodukt 1 durch eine Laserschneidmaschine ausgeschnitten werden. Der Einfluss der Zugspannungen auf die resultierenden Formen der Bauteile 23-26 ist in Fig 9b dargestellt. Wie in Fig 9b dargestellt, biegt sich der obere Teil des Bauteils 24 aufgrund der Zugspannungen 22 auf, wodurch die Formhaltigkeit leidet. Ähnlich verhält es sich auch beim oberen Teil des Bauteils 23. Jedenfalls geht aus den Darstellungen hervor, dass die Kenntnis der Eigenspannungen bei der Fertigung von hochgenauen Bauteilen extrem wichtig ist, da andernfalls signifikante Verzerrungen von Bauteilen nicht ausgeschlossen werden können. Die Schnittform 26' wurde unter Berücksichtigung der ermittelten Eigenspannungsverteilung im plattenförmigen Flachprodukt 1 ermittelt, sodass die Form des Bauteils 26 nach dem Ausschneiden der gewünschten Form möglichst entspricht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| 1 | Flachprodukt |
|---|---|
| 2a | eingangsseitiger Rollgang |
| 2b | ausgangsseitiger Rollgang |
| 3 | eingangsseitige Biegeeinrichtung |
| 3a | obere Einlauf-Rolle |
| 3b | untere Einlauf-Rolle |
| 4 | ausgangsseitige Biegeeinrichtung |
| 4a | obere Auslauf-Rolle |
| 4b | untere Auslauf-Rolle |
| 5 | Bogen |
| 6 | Abstandsmessgerät |
| 7 | Treibrolle |
| 8 | Haspel |
| 9 | Walzgerüst |
| 21 | Bereich ohne Zugspannungen |
| 22 | Bereich mit Zugspannungen |
| 23'...26' | Schnittform der Bauteile |
| 23...26 | Bauteile |

| B | Breite des Flachprodukts |
|---|---|
| g | Erdbeschleunigung |
| M | Mittelpunkt |
| $r, r_0$ | Krümmungsradius |
| T | Transportrichtung des Flachprodukts |
| x,y,z | x,y,z-Achse eines kartesischen Koordinatensystems |

**Patentansprüche**

1. Verfahren zur Planheitsmessung eines metallischen Flachprodukts (1), vorzugsweise eines Walzprodukts aus Stahl oder Aluminium, insbesondere eines Stahlbands, **gekennzeichnet durch** folgende Verfahrensschritte:

  - Biegen des Flachprodukts (1) in einer Biegeeinrichtung (3), sodass ein planes Flachprodukt (1) nach dem Biegen einen Bogen (5) mit einem Soll-Biegeradius $r_0$ ausbilden würde;
  - Messen der Kontur, insbesondere der Ist-Biegeradien r(y), im Bereich des Bogens (5) des gebogenen Flachprodukts (1) an mehreren Positionen (y) in der Breitenrichtung des Flachprodukts (1); und
  - Bestimmen der Planheit des Flachprodukts (1) unter Berücksichtigung der gemessenen Kontur des gebogenen Flachprodukts (1).

2. Verfahren nach Anspruch 1, **dadurch gekennzeichnet,**

  **dass** die Kontur, insbesondere die Ist-Biegeradien r(x,y), des gebogenen Flachprodukts an mehreren Positionen(x) in der Längsrichtung des Flachprodukts (1) gemessen wird; und
  **dass** die Planheit des Flachprodukts (1) für mehrere Positionen (x) in Längsrichtung des Flachprodukts (1) unter Berücksichtigung der gemessenen Konturen des gebogenen Flachprodukts (1) bestimmt wird.

3. Verfahren nach einem der Ansprüche 1 bis 2, **dadurch gekennzeichnet, dass** die Planheit des Flachprodukts (1) abgespeichert und bei einer Weiterverarbeitung des Flachprodukts (1) berücksichtigt wird.

4. Verfahren zur Messung der Eigenspannungen eines metallischen Flachprodukts (1), vorzugsweise eines Walzprodukts aus Stahl oder Aluminium, insbesondere eines Stahlbands, aufweisend folgende Verfahrensschritte:

  - Biegen des Flachprodukts (1) in einer Biegeeinrichtung (3), sodass ein eigenspannungsfreies Flachprodukt (1) nach dem Biegen einen Bogen (5) mit einem Soll-Biegeradius $r_0$ ausbilden würde;
  - Messen der Kontur, insbesondere der Ist-Biegeradien r(y), im Bereich des Bogens (5) des gebogenen Flachprodukts (1) an mehreren Positionen (y) in der Breitenrichtung des Flachprodukts;
  - Berechnen der Eigenspannung $\sigma_x(y)$ des Flachprodukts (1) unter Berücksichtigung der gemessenen Kontur des gebogenen Flachprodukts (1), beispielsweise durch

$$\sigma_x(y) = E.\varepsilon_x(y) = E.\frac{r_0 - r(y)}{r_0} \text{ ,}$$

  wobei $\sigma_x(y)$ die Eigenspannung des Flachprodukts (1) in x-Richtung an einer Position y in Breitenrichtung, E der Elastizitätsmodul des Flachprodukts (1), $\varepsilon_x(y)$ die Dehnung in x-Richtung an der Position y, r(y) der gemessene Ist-Biegeradius an der Position y, und $r_0$ der nominelle Biegeradius des Flachprodukts (1) ist.

5. Verfahren nach Anspruch 4, **dadurch gekennzeichnet,**

  **dass** die Kontur, insbesondere die Ist-Biegeradien r(x,y), des gebogenen Flachprodukts (1) an mehreren Positionen in der Längsrichtung des Flachprodukts (x) gemessen wird; und

**dass** die Eigenspannung $\sigma_x(x,y)$ des Flachprodukts für mehrere Positionen in Längsrichtung (x) des Flachprodukts (1) unter Berücksichtigung der gemessenen Konturen des gebogenen Flachprodukts (1) berechnet wird, beispielsweise durch

$$\sigma_x(x,y) = E.\varepsilon_x(x,y) = E.\frac{r_0 - r(x,y)}{r_0}.$$

6. Verfahren nach einem der Ansprüche 4 bis 5, **dadurch gekennzeichnet, dass** die Eigenspannungen $\sigma_x$ des Flachprodukts (1) abgespeichert und bei einer Weiterverarbeitung des Flachprodukts (1) berücksichtigt werden.

7. Verfahren nach einem der vorhergehenden Ansprüche, **dadurch gekennzeichnet, dass** die Messung eines Ist-Biegeradius r optisch durch zumindest einen Lichtstrahl, insbesondere einen Laserstrahl, erfolgt, wobei der Lichtstrahl von einer Lichtquelle (6) auf das Flachprodukt (1) ausgestrahlt, der Lichtstrahl von der Oberfläche des Flachprodukts (1) reflektiert, und der reflektierte Lichtstrahl von einem Empfänger (6) empfangen wird, und der Abstand zwischen der Lichtquelle (6), dem Flachprodukt (1) und dem Empfänger (6) durch die Laufzeit des Lichtstrahls, die Phasendifferenz zwischen dem ausgestrahlten und dem empfangenen Lichtstrahl oder durch Triangulation ermittelt wird.

8. Verfahren nach Anspruch 7, **dadurch gekennzeichnet, dass** mehrere Lichtstrahlen in Form eines Lichtgitters auf das Flachprodukt (1) projiziert, die Lichtstrahlen von der Oberfläche des Flachprodukts (1) reflektiert, und die reflektierten Lichtstrahlen von einer Kamera empfangen werden.

9. Verfahren nach Anspruch 7, **dadurch gekennzeichnet, dass** mehrere Lichtquellen (6) und mehrere Empfänger (6) in der Breitenrichtung (y) des Flachprodukts (1) angeordnet sind, und die Messung der Ist-Biegeradien r(y) in Breitenrichtung (y) des gebogenen Flachprodukts (1) im Wesentlichen zeitgleich erfolgt.

10. Verfahren zur Planheitsregelung eines metallischen Flachprodukts (1), vorzugsweise eines Walzprodukts aus Stahl oder Aluminium, insbesondere eines Stahlbands, in einem Walzwerk (9), aufweisend die Verfahrensschritte:

    - Walzen des Flachprodukts (1) im Walzwerk (9);
    - Planheitsmessung der Ist-Planheit $P_{Ist}$ des gewalzten Flachprodukts (1) nach einem der Ansprüche 1 bis 3, und 7 bis 9;
    - Bestimmung eines Regelfehlers e zwischen einer Soll-Planheit $P_{Soll}$ und der Ist-Planheit $P_{Ist}$, $e = P_{Soll} - P_{Ist}$;
    - Bestimmung einer Stellgröße u in Abhängigkeit der Abweichung e mittels eines Reglers;
    - Beaufschlagung eines Aktuators in einem Walzgerüst (9) des Walzwerks (9) mit der Stellgröße u, sodass der Regelfehler e minimiert wird.

11. Verfahren nach einem der vorhergehenden Ansprüche, **dadurch gekennzeichnet, dass** bei, kurz vor, vorzugsweise unmittelbar vor, oder kurz nach, vorzugsweise unmittelbar nach, der Messung der Kontur des gebogenen Flachprodukts (1) die Temperatur T(y) einer Faser des Flachprodukts (1) in der Breitenrichtung (y) gemessen wird und die Temperatur T(y) bei der Bestimmung der Planheit oder der Berechnung der Eigenspannung berücksichtigt wird.

12. Vorrichtung zur Planheitsmessung oder zur Messung der Eigenspannungen eines metallischen Flachprodukts (1), **gekennzeichnet durch**:

    - ein eingangsseitiger Rollgang (2a) zum Führen des Flachprodukts (1);
    - eine eingangsseitige Biegeeinrichtung (3) mit zumindest zwei Einlauf-Rollen (3a,3b) zum Biegen des Flachprodukts (1), sodass das gebogene Flachprodukt (1) einen Biegeradius $r_0$ ausbilden kann;
    - ein Abstandsmessgerät (6) zur Messung der Kontur, insbesondere der Ist-Biegeradien r(y), des gebogenen Flachprodukts (1) an mehreren Positionen in der Breitenrichtung (y) des Flachprodukts (1); und
    - eine Recheneinheit zur Bestimmung der Planheit oder der Eigenspannungen des Flachprodukts (1), das mit dem Abstandsmessgerät (6) signaltechnisch verbunden ist, wobei die Eigenspannungen beispielsweise gemäß

$$\sigma_x(y) = E.\varepsilon_x(y) = E.\frac{r_0 - r(y)}{r_0}$$

    bestimmt werden und $\sigma_x(y)$ die Eigenspannung des Flachprodukts (1) in x-Richtung an einer Position y in Breitenrichtung, E der Elastizitätsmodul des Flachprodukts (1), $\varepsilon_x(y)$ die Dehnung in x-Richtung an der Position y, r(y) der gemessene Ist-Biegeradius an der Position y, und $r_0$ der nominelle Biegeradius des Flachprodukts (1) ist.

13. Vorrichtung nach Anspruch 12, **dadurch gekennzeichnet, dass** das Abstandsmessgerät (6) ein optisches Abstandsmessgerät ist.

14. Vorrichtung nach einem der Ansprüche 12 bis 13, **dadurch gekennzeichnet, dass** das Abstandsmessgerät (6) in vertikaler Richtung oberhalb des Flachprodukts (1) angeordnet ist und vorzugsweise das Abstandsmessgerät (1) in horizontaler Richtung im Bereich des Scheitelpunkts des Bogens (5) des gebogenen Flachprodukts (1) angeordnet ist.

15. Vorrichtung nach einem der Ansprüche 12 bis 14, **dadurch gekennzeichnet, dass** die Vorrichtung weiters umfasst:

> - eine ausgangsseitige Biegeeinrichtung (4) mit zumindest zwei Auslauf-Rollen (4a,4b) zum Rückbiegen des gebogenen Flachprodukts (1); und
> - einen ausgangsseitigen Rollgang (2b) zum Führen des rückgebogenen Flachprodukts (1).

16. Vorrichtung nach Anspruch 15, **dadurch gekennzeichnet, dass** zumindest eine Rolle (3a,3b) der eingangsseitigen Biegeeinrichtung (3) zum Biegen des Flachprodukts (1) und/oder zumindest eine Rolle (4a,4b) der ausgangsseitigen Biegeeinrichtung (4) zum Rückbiegen des gebogenen Flachprodukts (1), antreibbar ist.

**Claims**

1. Method for measuring the flatness of a metallic flat product (1), preferably of a rolled product made of steel or aluminium, in particular of steel strip, **characterised by** the following method steps:

> - bending the flat product (1) in a bending device (3), so that after bending a planar flat product (1) would form an arc (5) with a target bending radius $r_0$;
> - measuring the contour, in particular the actual bending radii r(y), in the region of the arc (5) of the bent flat product (1) in a number of positions (y) in the width direction of the flat product (1); and
> - determining the flatness of the flat product (1) taking into account the measured contour of the bent flat product (1).

2. Method according to claim 1, **characterised in that** the contour, in particular the actual bending radii r(x,y), of the bent flat product is measured in a number of positions (x) in the longitudinal direction of the flat product (1); and the flatness of the flat product (1) is determined for a number of positions (x) in the longitudinal direction of the flat product (1) taking into account the measured contours of the bent flat product (1).

3. Method according to one of claims 1 to 2, **characterised in that** the flatness of the flat product (1) is stored and taken into account during further processing of the flat product (1).

4. Method for measuring the residual stresses of a metallic flat product (1), preferably of a rolled product made of steel or aluminium, in particular of steel strip, having the following method steps:

> - bending the flat product (1) in a bending device (3), so that after bending a residual stress-free flat product (1) would form an arc (5) with a target bending radius $r_0$;
> - measuring the contour, in particular the actual bending radii r(y), in the region of the arc (5) of the bent flat product (1) in a number of positions (y) in the width direction of the flat product;
> - calculating the residual stress $\sigma_x(y)$ of the flat product (1) taking into account the measured contour of the bent flat product (1), for example

by $\sigma_x(y) = E.\varepsilon_x(y) = E.\frac{r_0 - r(y)}{r_0}$, wherein $\sigma_x(y)$ is the residual stress of the flat product (1) in the x direction in a position y in the width direction, E is the modulus of elasticity of the flat product (1), $\varepsilon_x(y)$ is the elongation in the x direction in position y, r(y) is the measured actual bending radius in position y, and $r_0$ is the nominal bending radius of the flat product (1).

5. Method according to claim 4, **characterised in that** the contour, in particular the actual bending radii r(x,y), of the bent flat product (1) is measured in a number of positions in the longitudinal direction of the flat product (x); and the residual stress $\sigma_x(x,y)$ of the flat product is calculated for a number of positions in the longitudinal direction (x) of the flat product (1) taking into account the measured contours of the bent flat product (1), for example by

$$\sigma_x(x,y) = E.\varepsilon_x(x,y) = E.\frac{r_0 - r(x,y)}{r_0}.$$

6. Method according to one of claims 4 to 5, **characterised in that** the residual stresses $\sigma_x$ of the flat product (1) are stored and taken into account during further processing of the flat product (1).

7. Method according to one of the preceding claims, **characterised in that** an actual bending radius r is measured optically by means of at least one light beam, in particular a laser beam, the light beam being emitted from a light source (6) onto the flat product (1), the light beam being reflected by the surface of the flat product (1) and the reflected light beam being received by a receiver (6) and the distance between the light source (6), the flat product (1) and the receiver (6) is determined by means of the transit time of the light beam, the phase difference between the emitted light beam and the received light beam or by means of triangulation.

8. Method according to claim 7, **characterised in that** a number of light beams are projected onto the flat product (1) in the form of a light grid, the light beams are reflected by the surface of the flat product (1) and the reflected light beams are received by a camera.

9. Method according to claim 7, **characterised in that** a number of light sources (6) and a number of receivers (6) are arranged in the width direction (y) of the flat product (1) and measuring of the actual bending radii r(y) takes place essentially simultaneously in the width direction (y) of the bent flat product (1).

10. Method for regulating the flatness of a metallic flat product (1), preferably of a rolled product made of steel or aluminium, in particular of steel strip, in a rolling mill (9), having the following method steps,

    - rolling the flat product (1) in the rolling mill (9) ;
    - measuring the flatness of the actual flatness $P_{Act}$ of the rolled flat product (1) according to one of claims 1 to 3, and 7 to 9;
    - determining a regulating error e between a target flatness $P_{Tar}$ and the actual flatness $P_{Act}$, $e = P_{Tar} - P_{Act}$;
    - determining a correcting variable u as a function of the deviation e by means of a regulator;
    - applying the correcting variable u to an actuator in a rolling stand (9) of the rolling mill (9), so that the regulating error e is minimised.

11. Method according to one of the preceding claims, **characterised in that** during, shortly before, preferably immediately before, or shortly after, preferably immediately after, the measuring of the contour of the bent flat product (1) the temperature T(y) of a fibre of the flat product (1) is measured in the width direction (y) and the temperature T(y) is taken into account when determining flatness or calculating the residual stress.

12. Apparatus for measuring flatness or for measuring the residual stresses of a metallic flat product (1), **characterised by**:

    - an input-side rolling conveyor (2a) for conveying the flat product (1);
    - an input-side bending device (3) having at least two entry rollers (3a,3b) for bending the flat product (1), so that the bent flat product (1) can form a bending radius $r_0$;

    - a distance measuring device (6) for measuring the contour, in particular the actual bending radii r(y), of the bent flat product (1) in a number of positions in the width direction (y) of the flat product (1); and
    - a computation unit for determining the flatness or the residual stresses of the flat product (1), which is connected to the distance measuring device (6) for the purpose of exchanging signals, wherein the residual stress is determined, for example, according to

$$\sigma_x(y) = E . \varepsilon_x(y) = E . \frac{r_0 - r(y)}{r_0} \quad \text{and} \quad \sigma_x(y)$$

is the residual stress of the flat product (1) in the x direction in a position y in the width direction, E is the modulus of elasticity of the flat product (1), $\varepsilon_x(y)$ is the elongation in the x direction in position y, r(y) is the measured actual bending radius in position y, and $r_0$ is the nominal bending radius of the flat product (1).

13. Apparatus according to claim 12, **characterised in that** the distance measuring device (6) is an optical distance measuring device.

14. Apparatus according to one of claims 12 to 13, **characterised in that** the distance measuring device (6) is arranged in a vertical direction above the flat product (1) and the distance measuring device (1) is preferably arranged in a horizontal direction in the region of the apex of the arc (5) of the bent flat product (1).

15. Apparatus according to one of claims 12 to 14, **characterised in that** the apparatus also comprises:

    - an output-side bending device (4) having at least two exit rollers (4a,4b) for bending back the bent flat product (1); and
    - an output-side rolling conveyor (2b) for conveying the bent back flat product (1).

16. Apparatus according to claim 15, **characterised in that** at least one roller (3a,3b) of the input-side bending device (3) can be driven to bend the flat product (1) and/or at least one roller (4a,4b) of the output-side bending device (4) can be driven to bend back the bent flat product (1).

**Revendications**

1. Procédé de mesure de la planéité d'un produit métallique plat (1), préférentiellement d'un produit laminé en acier ou en aluminium, et plus particulièrement d'un feuillard d'acier, **caractérisé par** les étapes de procédé suivantes :

- pliage du produit plat (1) dans un dispositif de pliage (3), de sorte qu'un produit plat et plan (1) constituerait, après le pliage, un arc (5) présentant un rayon de courbure de consigne $r_0$ ;
- mesure du contour, en particulier des rayons de courbure effectifs r(y), dans la zone de l'arc (5) du produit plat plié (1) à plusieurs positions (y) dans le sens de la largeur du produit plat (1) et
- détermination de la planéité du produit plat (1) compte tenu du contour mesuré du produit plat plié (1).

2. Procédé selon la revendication 1, **caractérisé en ce que** le contour, et plus particulièrement les rayons de courbure effectifs r(x,y) du produit plat plié sont mesurés à plusieurs positions (x) dans le sens longitudinal du produit plat (1) et **en ce que** la planéité du produit plat (1) est déterminée pour plusieurs positions (x) dans le sens longitudinal du produit plat (1) compte tenu des contours mesurés du produit plat plié (1).

3. Procédé selon l'une des revendications 1 à 2, **caractérisé en ce que** la planéité du produit plat (1) est sauvegardée et est prise en compte lors d'un traitement ultérieur du produit plat (1).

4. Procédé de mesure des contraintes internes d'un produit métallique plat (1), préférentiellement d'un produit laminé en acier ou en aluminium, et plus particulièrement d'un feuillard d'acier, **caractérisé par** les étapes de procédé suivantes :

    - pliage du produit plat (1) dans un dispositif de pliage (3), de sorte qu'un produit plat exempt de contraintes internes (1) constituerait, après le pliage, un arc (5) présentant un rayon de courbure de consigne $r_0$ ;
    - mesure du contour, en particulier des rayons de courbure effectifs r(y), dans la zone de l'arc (5) du produit plat plié (1) à plusieurs positions (y) dans le sens de la largeur du produit plat ;
    - calcul de la contrainte interne $\sigma_x(y)$ du produit plat (1) compte tenu du contour mesuré du produit plat plié (1), par exemple par

$$\sigma_x(y) = E.\varepsilon_x(y) = E.\frac{r_0 - r(y)}{r_0} \, ,$$

où $\sigma_x(y)$ est la contrainte interne du produit plat (1) dans la direction x en une position y dans le sens de la largeur, E est le module d'élasticité du produit plat (1), $\varepsilon_x(y)$ est l'allongement dans la direction x à la position y, r(y) est le rayon de courbure effectif mesuré à la position y et $r_0$ est le rayon de courbure nominal du produit plat (1).

5. Procédé selon la revendication 4, **caractérisé en ce que** le contour, et plus particulièrement les rayons de courbure effectifs r(x,y) du produit plat plié (1) sont mesurés à plusieurs positions dans le sens longitudinal du produit plat (x) et **en ce que** la contrainte interne $\sigma_x(x,y)$ du produit plat est calculée pour plusieurs positions dans le sens longitudinal (x) du produit plat (1) compte tenu des contours mesurés du produit plat plié (1), par exemple par

$$\sigma_x(x,y) = E.\varepsilon_x(x,y) = E.\frac{r_0 - r(x,y)}{r_0} \, .$$

6. Procédé selon l'une des revendications 4 à 5, **caractérisé en ce que** les contraintes internes $\sigma_x$ du produit plat (1) sont sauvegardées et prises en compte lors d'un traitement ultérieur du produit plat (1).

7. Procédé selon l'une des revendications précédentes, **caractérisé en ce que** la mesure d'un rayon de courbure effectif r est effectuée optiquement par au moins un rayon lumineux, et plus particulièrement par un rayon laser, le rayon lumineux étant envoyé par une source de lumière (6) sur le produit plat (1), le rayon lumineux étant réfléchi par la surface du produit plat (1) et le rayon lumineux réfléchi étant reçu par un récepteur (6) et la distance entre la source de lumière (6), le produit plat (1) et le récepteur (6) étant déterminée par le temps de propagation du rayon lumineux, la différence de phase entre rayon lumineux émis et reçu ou par triangulation.

8. Procédé selon la revendication 7, **caractérisé en ce que** plusieurs rayons lumineux sont projetés sous forme de grille lumineuse sur le produit plat (1), **en ce que** les rayons lumineux sont réfléchis par la surface du produit plat (1) et **en ce que** les rayons lumineux réfléchis sont reçus par une caméra.

9. Procédé selon la revendication 7, **caractérisé en ce que** plusieurs sources de lumière (6) et plusieurs récepteurs (6) sont agencés dans le sens de la largeur (y) du produit plat (1) et **en ce que** la mesure des rayons de courbure effectifs r(y) dans le sens de la largeur (y) du produit plat plié (1) a lieu sensiblement simultanément.

10. Procédé de réglage de la planéité d'un produit métallique plat (1), préférentiellement d'un produit laminé en acier ou en aluminium, et plus particulièrement d'un feuillard d'acier, dans un laminoir (9), comportant les étapes de procédé suivantes :

    - laminage du produit plat (1) dans le laminoir (9) ;
    - mesure de la planéité effective $P_{Ist}$ du produit plat laminé (1) selon l'une des revendications 1 à 3 et 7 à 9 ;
- détermination d'une erreur de réglage e entre une planéité de consigne P$_{Soll}$ et la planéité effective P$_{Ist}$, e = P$_{Soll}$ - P$_{Ist}$ ;
- détermination d'une grandeur de réglage u en fonction de l'écart e au moyen d'un régulateur ;
- application de la grandeur de réglage u à un actionneur dans une cage de laminage (9) du laminoir (9), de sorte que l'erreur de réglage 3 est minimisée.

11. Procédé selon l'une des revendications précédentes, **caractérisé en ce que**, peu avant, de préférence directement avant, ou peu après, de préférence directement après la mesure du contour du produit plat plié (1), la température T(y) d'une fibre du produit plat (1) est mesurée dans le sens de la largeur (y) et que la température T(y) est prise en compte lors de la détermination de la planéité ou du calcul de la contrainte interne.

12. Dispositif de mesure de la planéité ou de mesure des contraintes internes d'un produit métallique plat (1), **caractérisé par** :

   - un train de rouleaux côté entrée (2a) pour guider le produit plat (1);
   - un dispositif de pliage côté entrée (3) comportant au moins deux rouleaux d'entrée (3a,3b) pour plier le produit plat (1), de sorte que le produit plat plié (1) peut constituer un rayon de courbure r$_0$ ;
   - un instrument de mesure de distance (6) pour mesurer le contour, et plus particulièrement les rayons de courbure effectifs r(y) du produit plat plié (1) à plusieurs positions dans le sens de la largeur (y) du produit plat (1) et
   - une unité de calcul pour déterminer la planéité ou les contraintes internes du produit plat (1) qui est relié à l'instrument de mesure de distance (6) par la technique de signalisation, les contraintes internes étant déterminées, par exemple, selon

$$\sigma_x(y) = E.\varepsilon_x(y) = E.\frac{r_0 - r(y)}{r_0}$$

et σ$_x$(y) étant la contrainte interne du produit plat (1) dans la direction x en une position y dans le sens de la largeur, E étant le module d'élasticité du produit plat (1), ε$_x$(y) étant l'allongement dans la direction x à la position y, r(y) étant le rayon de courbure effectif mesuré à la position y et r$_0$ étant le rayon de courbure nominal du produit plat (1).

13. Dispositif selon la revendication 12, **caractérisé en ce que** l'instrument de mesure de distance (6) est un instrument optique de mesure de distance.

14. Dispositif selon l'une des revendications 12 à 13, **caractérisé en ce que** l'instrument de mesure de distance (6) est agencé dans le sens vertical au-dessus du produit plat (1) et **en ce que** l'instrument de mesure de distance (1) est préférentiellement agencé dans le sens horizontal dans la zone du sommet de l'arc (5) du produit plat plié (1).

15. Dispositif selon l'une des revendications 12 à 14, **caractérisé en ce que** le dispositif comprend en outre :

   - un dispositif de pliage côté sortie (4) avec au moins deux rouleaux de sortie (4a,4b) pour déplier le produit plat plié (1) et
   - un train de rouleaux côté sortie (2b) pour guider le produit plat déplié (1).

16. Dispositif selon la revendication 15, **caractérisé en ce que** peuvent être entraînés au moins un rouleau (3a,3b) du dispositif de pliage côté entrée (3) pour plier le produit plat (1) et/ou au moins un rouleau (4a,4b) du dispositif de pliage côté sortie (4) pour déplier le produit plat plié (1).

# FIG 1

# FIG 2a

FIG 2b

FIG 3

FIG 4

3a       6       4a

5

1

r0

M

3b

2a

3b

4b

4b

2b

FIG 5

3a    6    4a

5

1

r0

3b

2a

3b

M

4b

2b

FIG 6a

FIG 6b

FIG 7

FIG 8

FIG 9a

FIG 9b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1369186 A2

### In der Beschreibung aufgeführte Nicht-Patentliteratur

- **FABIAN LOGES.** Entwicklung neuer Strategien zur Messung und Regelung der Bandplanheit beim Flachwalzen. Kassel University Press, 2009

- **V.B. GINZBURG.** High-quality steel rolling: theory and practice. Marcel Dekker Inc, 1993